# EUROPEAN PATENT APPLICATION

(11) **EP 4 742 676 A1**
(43) Date of publication of application: **13.05.2026**
(21) Application number: 24212096.2
(22) Date of filing: 11.11.2024
(51) Int. Cl.: H04N 19/597, H04N 19/70, H04N 19/42, G06T 9/00

(54) **ENCODING AND DECODING A REPRESENTATION OF A 3D SCENE**

(71) Applicant: Koninklijke Philips N.V., 5656 AG Eindhoven (NL)
(72) Inventor: VAREKAMP, Christiaan, Eindhoven (NL); KROON, Bart, Eindhoven (NL)
(74) Representative: Philips Intellectual Property & Standards

(57) **Abstract**

The invention provides a bitstream, an encoding apparatus and method for encoding the bitstream, and a decoding apparatus and method for decoding the bitstream. The bitstream comprises a first plurality of encoded data structures and at least one further plurality of encoded data structures. Each data entry in each encoded data structure of the first plurality comprises parameters for a respective 3D Gaussian splat in a first set of 3D Gaussian splats representing a 3D scene at a first moment in time. Each data entry in each encoded data structure of each further plurality comprises parameters for a respective 3D Gaussian splat in a further set of 3D Gaussian splats representing the 3D scene at a further moment in time. Each data structure in each further plurality corresponds to a data structure in the first plurality. Corresponding data structures have the same number of data entries as one another.

## Description

### FIELD OF THE INVENTION

The invention relates to the field of representations of 3D scenes, and, in particular, to encoding and decoding 3D Gaussian splat data.

### BACKGROUND OF THE INVENTION

Six degree of freedom (6 DoF) immersive video allows a scene to be viewed from different positions and orientations. The creation of 6 DoF immersive video uses multiple cameras to capture images of a scene from different viewpoints. The captured images are then processed to generate an image at a new viewpoint.

Various approaches have been used to generate an image at a new viewpoint. For instance, images of a scene from different viewpoints may be processed to estimate a depth map for each image, and the depth maps may be used to project each point in the 3D scene to the imaging plane of a virtual camera at the new viewpoint. This method can lead to low quality images if there are inaccuracies in the depth estimation process (caused, for example, by light reflection or a lack of local variation in color).

Another technique involves the use of a neural radiance field (NeRF) algorithm to model the scene. This approach provides high quality images of scenes from new viewpoints, but is much less efficient than traditional depth estimation methods. A NeRF algorithm is trained for a specific scene using images of the scene from different viewpoints as ground truth; this process can take up to several hours, while rendering a new image using the trained NeRF algorithm typically takes up to several seconds per frame.

3D Gaussian Splatting is a new technique for representing a 3D scene, first described in B. Kerbl et al. (2023), "3D Gaussian Splatting for Real-Time Radiance Field Rendering", ACM Transactions on Graphics, 42(4):139(1-14). In this technique, the 3D scene is represented by a set of 3D Gaussian splats, the parameters of which are optimized to generate a 3D representation of the scene. This provides high quality images that can be rendered much faster than NeRF-based methods.

Various methods have been proposed for encoding 3D Gaussian Splatting data for a static scene; however, these methods are time-consuming, and are not therefore well-suited to encoding 3D Gaussian Splatting data for a dynamic scene.

### SUMMARY OF THE INVENTION

The invention is defined by the claims.

According to examples in accordance with an aspect of the invention, there is provided a method for decoding a dynamic representation of a 3D scene, the method comprising: receiving a bitstream comprising: a first plurality of encoded data structures for a first frame of a 3D scene including a first data structure and a second data structure, wherein each data entry in each encoded data structure in the first plurality comprises a set of parameters for a respective 3D Gaussian splat in a first set of 3D Gaussian splats representing the 3D scene at a first moment in time; and a second plurality of encoded data structures for a second frame of the 3D scene, wherein each data entry in each encoded data structure in the second plurality comprises a set of parameters for a respective 3D Gaussian splat in a second set of 3D Gaussian splats representing the 3D scene at a second, different moment in time, and wherein each data structure in the second plurality corresponds to a respective data structure in the first plurality and has the same number of data entries as the corresponding data structure in the first plurality; determining the number of data structures per frame and the number of data entries in each data structure; decoding a first subset of data structures in the first plurality of encoded data structures; and decoding a second subset of data structures in the second plurality of encoded data structures, wherein, for each data structure in the second subset, the corresponding data structure is included in the first subset.

Having the same number of data structures per frame and a fixed number of data entries in corresponding data entries across the frames, and determining the number of data structures per frame and the number of data entries in each data structure prior to decoding the data structures ensures that only decoders capable of decoding the bitstream are used, and enables the memory for the parameters of the 3D Gaussian splats to be pre-allocated on a CPU and GPU of a decoding apparatus. The ability to pre-allocate memory for parameters of 3D Gaussian splats allows performance tests to be carried out, enabling a balance to be struck between power consumption and image quality. In this way, the decoding apparatus is able to use a "once initialized" data structure, rather than a dynamic one, thus improving the performance of the decoding apparatus.

The number of data structures per frame may be defined in the bitstream or by external means. Similarly, the number of data entries in each data structure may be defined in the bitstream or by external means.

In some examples, the first data structure in the first subset is decoded by a first decoder; the second data structure in the first subset is decoded by a second, different decoder; and each data structure in the second subset is decoded by the decoder that decoded the corresponding data structure in the first subset.

In other words, different data structures for the same frame may be decoded in parallel. This improves an efficiency of decoding the bitstream. In some examples, the number of decoders may correspond to the number of data structures per frame, such that each data structure in a frame is decoded by a different decoder.

In some examples, at least one data structure corresponds to a region of the 3D scene; the method further comprises defining a target viewport for each frame; and for any data structure that corresponds to a region of the 3D scene, the data structure is only included in the first or second subset if the data structure corresponds to a region of the 3D scene that is determined to be visible in the target viewport and/or is identified as being required for decoding a data structure corresponding to a region of the 3D scene that is visible in the target viewport.

This further improves an efficiency of decoding the bitstream, as data structures that are not required for rendering an image frame in the target viewport are not decoded. One difficulty in transmitting 3D Gaussian splat data is that the 3D Gaussian splat data is an unordered list of all splats in the scene; a decoder is therefore not able to identify which splats are needed until the entire list has been decoded. By grouping the 3D Gaussian splats into different data structures according to their location within the scene, decoded data relating to 3D Gaussian splats that are not visible in a target viewport can be identified without decoding the data.

In some examples, a data structure corresponding to a region of the 3D scene that is not visible in the target viewport may be decoded if it is determined that the data structure is required for decoding a data structure corresponding to a region that is visible (e.g. in another frame). For instance, a reference data structure containing at least one reference data entry that is used to decode a data entry in another data structure may be decoded. In some examples, the reference data structure may be accompanied in the bitstream by an indication that the reference data structure is required for decoding another data structure; alternatively, the reference data structure may be left encoded until decoding a data structure for which the reference data structure is required.

In some examples, at least some data structures may each correspond to a region defining an object (or part of an object) in the 3D scene.

In some examples, the method comprises: defining a target viewport for each frame; processing at least some of the decoded data structures in the first subset to render a first image frame in the target viewport for the first frame; and processing at least some of the decoded data structures in the second subset to render a second image frame in the target viewport for the second frame.

In other words, different data structures for the same frame may be rendered in parallel. This may improve an efficiency of rendering the image frame.

In some examples, the first data structure in the first subset is rendered by a first renderer; the second data structure in the first subset is rendered by a second, different renderer; and each data structure in the second subset is rendered by the renderer that rendered the corresponding data structure in the first subset.

Alternatively, some (but not all) data structures in a single frame may be rendered by a single renderer. This can be done in parallel if the data between clusters to not overlap in view-space. If they do overlap in view space but not in 3D space and all Gaussians in a first data structure lie further or closer than all Gaussians in a second cluster, then each data structure can still have its own renderer but the render order matters. In case clusters overlap is, projected 2D, view space or in 3D space then a single renderer needs to render both the first and second data structure. Note that for correct rendering an analysis of the 3D Gaussian splats (e.g. sorting front-to-back) is needed.

In some examples, at least one data structure corresponds to a region of the 3D scene; and for each image frame, a data structure that corresponds to a region of the 3D scene is processed to render the image frame only if the data structure is determined to correspond to a region of the 3D scene that is visible in the target viewport.

This improves an efficiency of rendering the image frames.

In some examples, at least one data structure in the first plurality contains a reference data entry and at least one further data entry, wherein the set of parameters for each further data entry is a set of first residual parameters; and the step of decoding the first subset of data structures in the first plurality of encoded data structures comprises, for each data structure containing a reference data entry and at least one further data entry: identifying the reference data entry; and for each further data entry, adding the set of first residual parameters to the set of parameters in the reference data entry.

In other words, within each data structure, the parameters of at least one 3D Gaussian splat may be coded with reference to another 3D Gaussian splat in the same data structure to enable more efficient transmission and decoding.

In examples in which parallel decoding is used to decode each frame of the bitstream, grouping the sets of parameters in data structures allows the parameters of at least one 3D Gaussian splat to be coded with reference to another 3D Gaussian splat by including the reference 3D Gaussian splat in the same data structure and decoding using the same bitstream to decode a single data structure.

In examples in which each data structure corresponds to a spatial region of the 3D scene, coding the parameters of at least one 3D Gaussian splat with reference to another 3D Gaussian splat in the same data structure is likely to be particularly effective, as 3D Gaussian splats that belong to a same region in the 3D scene are more likely to have similar parameters.

In some examples, at least one set of parameters in at least one data structure in the second plurality is a set of second residual parameters; and the step of decoding the second subset of data structures in the second plurality of encoded data structures comprises, for each data entry having a set of second residual parameters, adding the set of second residual parameters to the set of parameters for the corresponding data entry in the corresponding data structure in the first plurality.

In other words, the parameters of at least one 3D Gaussian splat in one frame may be coded with reference to another 3D Gaussian splat in a corresponding data structure in another frame to enable more efficient transmission and decoding.

In examples in which parallel decoding is used to decode each frame of the bitstream, the same decoder is used for corresponding data structures, meaning that the reference set of parameters is available to the decoder.

In examples in which each data structure corresponds to a spatial region of the 3D scene, coding the parameters of at least one 3D Gaussian splat with reference to another 3D Gaussian splat in a corresponding data structure in another frame is likely to be particularly effective, as a corresponding 3D Gaussian splat in another frame belonging to the same region is more likely to have similar parameters.

In some examples, the bitstream further comprises, for at least one data structure in the second plurality, at least one shared residual parameter; and the step of decoding the second subset of data structures in the second plurality of encoded data structures comprises, for each data structure having at least one shared residual parameter, transforming the set of parameters for each data entry in the corresponding data structure in the first plurality based on the at least one shared residual parameter before adding the set of second residual parameters.

In some cases, a difference in at least one parameter in each data entry in a data structure in the second plurality and the parameter in the corresponding data entry in the corresponding data structure in the first plurality may be more efficiently coded by the use of a shared residual parameter that is applied to each data entry in the data structure. This may particularly be the case in examples in which the data structure corresponds to a region defining an object in the 3D scene, as a translation and/or rotation of the object will result in a corresponding change in the set of parameters for each data entry in the data structure.

According to examples in accordance with another aspect of the invention, there is provided a method for encoding a dynamic representation of a 3D scene, the method comprising: obtaining a sequence of frames of a 3D scene, the sequence comprising: a first frame including a first set of 3D Gaussian splats representing the 3D scene at a first moment in time; and a second frame including a second set of 3D Gaussian splats representing the 3D scene at a second, different moment in time; for the first frame: defining a first plurality of data structures; assigning each 3D Gaussian splat in the first set to one of the data structures in the first plurality; for each 3D Gaussian splat in the first set, adding a set of parameters for the 3D Gaussian splat to the data structure to which the 3D Gaussian splat is assigned; and encoding, into a bitstream, each data structure in the first plurality; and for the second frame: defining a second plurality of data structures, wherein each data structure in the second plurality corresponds to a respective data structure in the first plurality, and wherein each data structure in the second plurality has the same number of data entries as the corresponding data structure in the first plurality; assigning each 3D Gaussian splat in the second set to one of the data structures in the second plurality; for each 3D Gaussian splat in the second set, adding a set of parameters for the 3D Gaussian splat to the data structure to which the 3D Gaussian splat is assigned; and encoding, into the bitstream, each data structure in the second plurality.

In some examples, any 3D Gaussian splat in the second set that corresponds to a 3D Gaussian splat in the first set is assigned to a corresponding data entry in the data structure in the second plurality that corresponds to the data structure in the first plurality to which the corresponding 3D Gaussian splat in the first set was assigned.

This enables 3D Gaussian splats in the second set to be encoded with reference to the corresponding 3D Gaussian splat in the first set.

In some examples, at least one data structure corresponds to a region of the 3D scene.

This results in a bitstream that may be decoded and rendered more efficiently, as only those data structures that correspond to regions that are visible in a target viewport need to be decoded and rendered.

For instance, the first plurality of data structures may be defined by defining an overall volume for the first set of 3D Gaussian splats, and dividing the overall volume into a plurality of sub-volumes, each sub-volume corresponding to a respective data structure of the first plurality. The overall volume may, for example, be divided into sub-volumes of equal size, or divided into sub-volumes based on the distribution of 3D Gaussian splats within the overall volume (e.g. such that each sub-volume contains a same or similar number of 3D Gaussian splats).

Each 3D Gaussian splat in the first set may then be assigned to the data structure corresponding to the sub-volume in which the center of the 3D Gaussian splat is found.

Further, parameters for 3D Gaussian splats in a data structure that corresponds to a region of a scene may be encoded more efficiently, as the positions of the 3D Gaussian splats in the data structure may be encoded with reference to a reference position for the region (e.g. a position of a center of the region). In this way, position information for the 3D Gaussian splats may be encoded using fewer bits.

In some examples, at least one data structure corresponds to a region defining an object in the 3D scene.

This enables a more interactive rendering of the 3D scene. For instance, the 3D scene may be rendered without one or more objects, or an object could be rendered by itself.

Further, a data structure in the second frame that corresponds to a region defining an object can be coded with reference to the data structure corresponding to the object in the first frame, such that a movement and/or rotation of the object may be coded using a transformation to be applied to all data entries in the data structure in the second frame.

In some examples, at least one data structure corresponds to a sports player or sports object in the scene.

In some examples, the first frame and the second frame each include at least one further 3D Gaussian splat; and the method further comprises: identifying which of the 3D Gaussian splats included in the first frame form the first set of 3D Gaussian splats; and identifying which of the 3D Gaussian splats included in the second frame form the second set of 3D Gaussian splats.

There is also provided a computer program product comprising computer program code means which, when executed on a computing device having a processing system, cause the processing system to perform all of the steps of any method described above.

According to examples in accordance with yet another aspect of the invention, there is provided a bitstream comprising: a first plurality of encoded data structures for a first frame of a 3D scene, wherein each data entry in each encoded data structure in the first plurality comprises a set of parameters for a respective 3D Gaussian splat in a first set of 3D Gaussian splats representing the 3D scene at a first moment in time; and a second plurality of encoded data structures for a second frame of the 3D scene, wherein each data entry in each encoded data structure in the second plurality comprises a set of parameters for a respective 3D Gaussian splat in a second set of 3D Gaussian splats representing the 3D scene at a second, different moment in time, and wherein each data structure in second plurality corresponds to a respective data structure in the first plurality and has the same number of data entries as the corresponding data structure in the first plurality.

According to examples in accordance with yet another aspect of the invention, there is provided a decoding apparatus for decoding a dynamic representation of a 3D scene. The decoding apparatus is configured to: receive a bitstream comprising: a first plurality of encoded data structures for a first frame of a 3D scene including a first data structure and a second data structure, wherein each data entry in each encoded data structure in the first plurality comprises a set of parameters for a respective 3D Gaussian splat in a first set of 3D Gaussian splats representing the 3D scene at a first moment in time; and a second plurality of encoded data structures for a second frame of the 3D scene, wherein each data entry in each encoded data structure in the second plurality comprises a set of parameters for a respective 3D Gaussian splat in a second set of 3D Gaussian splats representing the 3D scene at a second, different moment in time, and wherein each data structure in the second plurality corresponds to a respective data structure in the first plurality and has the same number of data entries as the corresponding data structure in the first plurality; determine the number of data structures per frame and the number of data entries in each data structure; decode a first subset of data structures in the first plurality of encoded data structures; and decode a second subset of data structures in the second plurality of encoded data structures, wherein, for each data structure in the second subset, the corresponding data structure is included in the first subset.

According to examples in accordance with yet another aspect of the invention, there is provided an encoding apparatus for encoding a dynamic representation of a 3D scene. The encoding apparatus is configured to: obtain a sequence of frames of a 3D scene, the sequence comprising: a first frame including a first set of 3D Gaussian splats representing the 3D scene at a first moment in time; and a second frame including a second set of 3D Gaussian splats representing the 3D scene at a second, different moment in time; for the first frame: define a first plurality of data structures; assign each 3D Gaussian splat in the first set to one of the data structures in the first plurality; for each 3D Gaussian splat in the first set, add a set of parameters for the 3D Gaussian splat to the data structure to which the 3D Gaussian splat is assigned; and encode, into a bitstream, each data structure in the first plurality; and for the second frame: define a second plurality of data structures, wherein each data structure in the second plurality corresponds to a respective data structure in the first plurality, and wherein each data structure in the second plurality has the same number of data entries as the corresponding data structure in the first plurality; assign each 3D Gaussian splat in the second set to one of the data structures in the second plurality; for each 3D Gaussian splat in the second set, add a set of parameters for the 3D Gaussian splat to the data structure to which the 3D Gaussian splat is assigned; and encode, into the bitstream, each data structure in the second plurality.

There is also provided a method of distributing the bitstream described above. The distributing may comprise at least one of: broadcasting the image or video sequence over a terrestrial, satellite-based, or cable-based television platform; and delivering (for example, streaming) the image or video sequence over the internet using an over-the-top media service.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a method for encoding a dynamic representation of a 3D scene, according to an embodiment of the invention;
Fig. 2 illustrates an example sequence of frames;
Fig. 3 illustrates an example overall volume enclosing the first set of 3D Gaussian splats belonging to the first frame in the example of Fig. 2;
Fig. 4 illustrates an example of how the example overall volume of Fig. 3 may be divided into sub-volumes;
Fig. 5 illustrates how the 3D Gaussian splats in the first set are assigned to data structures corresponding to the sub-volumes shown in Fig. 4;
Fig. 6 illustrates how parameters in at least one data structure in the second plurality may be encoded with reference to parameters in the first plurality;
Fig. 7 illustrates how at least one shared residual parameter may be used to transform the parameters for all 3D Gaussian splats in a data structure;
Fig. 8 illustrates a method for decoding a dynamic representation of a 3D scene, according to an embodiment of the invention; and
Fig. 9 illustrates a pipeline for transmitting dynamic representation of a 3D scene.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a bitstream, an encoding apparatus and method for encoding the bitstream, and a decoding apparatus and method for decoding the bitstream. The bitstream comprises a first plurality of encoded data structures and at least one further plurality of encoded data structures. Each data entry in each encoded data structure of the first plurality comprises parameters for a respective 3D Gaussian splat in a first set of 3D Gaussian splats representing a 3D scene at a first moment in time. Each data entry in each encoded data structure of each further plurality comprises parameters for a respective 3D Gaussian splat in a further set of 3D Gaussian splats representing the 3D scene at a further moment in time. Each data structure in each further plurality corresponds to a data structure in the first plurality. Corresponding data structures have the same number of data entries as one another.

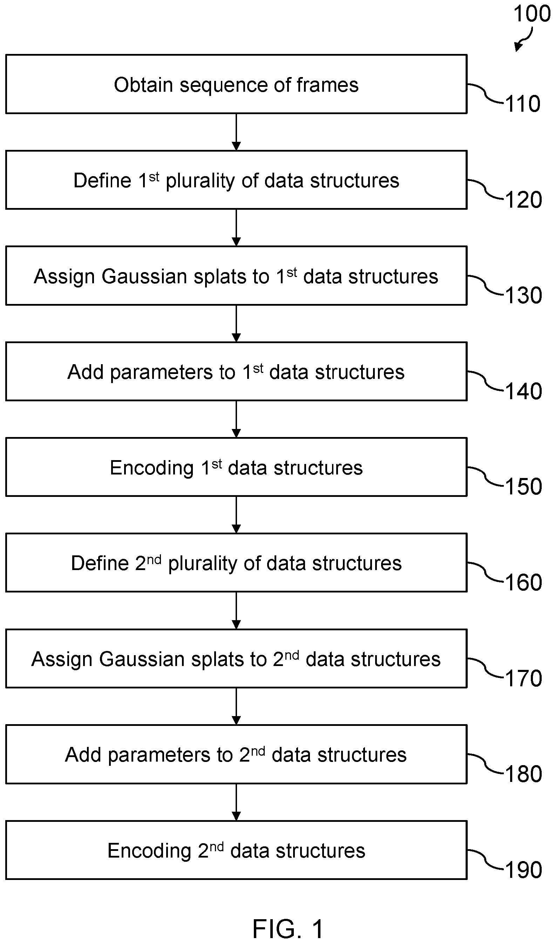

Fig. 1 illustrates a method 100 for encoding a dynamic representation of a 3D scene, according to an embodiment of the invention.

The method begins at step 110, at which a sequence of frames of a 3D scene is obtained. The sequence of frames comprises a first frame including a first set of 3D Gaussian splats representing the 3D scene at a first moment in time, and a second frame including a second set of 3D Gaussian splats representing the 3D scene at a second, different moment in time. In some examples, the sequence of frames may further comprise one or more further frames (e.g. a third frame, a fourth frame, and so on), each further frame including a respective further set of 3D Gaussian splats representing the 3D scene at a respective moment in time.

Each set of 3D Gaussian splats may have been generated by processing a respective set of image frames of the 3D scene, each set of image frames comprising a plurality of views of the 3D scene at a particular moment in time. The generation of a set of 3D Gaussian splats from a plurality of views of a 3D scene is described in B. Kerbl et al. (2023), "3D Gaussian Splatting for Real-Time Radiance Field Rendering", ACM Transactions on Graphics, 42(4):139(1-14).

In some examples, each frame in the sequence may be obtained and processed in real-time or close to real-time. In other words, as soon as each set of image frames of a scene is acquired (by a plurality of cameras), the set of image frames is processed to generate a set of 3D Gaussian splats, and as soon as the set of 3D Gaussian splats is generated, a frame containing the set of 3D Gaussian splats is obtained and processed to encode the parameters of the 3D Gaussian splats.

Each frame contains a set of parameters for each 3D Gaussian splat in the set of 3D Gaussian splats for the frame. The sets of parameters in each frame are provided in an arbitrary order; in other words, a 3D Gaussian splat for a point in the 3D scene in the first set does not necessarily have the same position in the first frame as the position in the second frame of a 3D Gaussian splat in the second set for the same point in the 3D scene.

The set of parameters for each 3D Gaussian splat define the 3D Gaussian splat. The parameters defining a set of 3D Gaussian splats may comprise, for each 3D Gaussian splat in the set, a position (i.e. a position of the center of the 3D Gaussian splat), an orientation, a scale, an opacity, and a color.

In the context of the present disclosure, a "frame" contains a list of parameters defining a set of 3D Gaussian splats representing a 3D scene at a particular moment in time, while an "image frame" contains imaging data defining an image (e.g. an image captured by a camera or an image rendered by rasterizing at least some of a set of 3D Gaussian splats representing a 3D scene at a particular moment in time).

In some examples, each frame may contain at least one further 3D Gaussian splat, where the further 3D Gaussian splat(s) for a frame contribute to a more detailed representation of the 3D scene when combined with the set of 3D Gaussian splats for the frame. In other words, the number of 3D Gaussian splats in a frame may be greater than the set of 3D Gaussian splats for which parameters are encoded. For instance, in order to provide a bitstream having a particular complexity and bit rate, a maximum number of 3D Gaussian splats may apply to each set of 3D Gaussian splats. For any frame containing a number of 3D Gaussian splats that exceeds the maximum number, not all of the 3D Gaussian splats will be included in the set of 3D Gaussian splats for the frame.

In these examples, the method 100 may comprise, for each frame, a step of identifying which of the 3D Gaussian splats included in the frame form the set of 3D Gaussian splats for the frame. The step of identifying which 3D Gaussian splats included in a frame form the set of 3D Gaussian splats for the frame may comprise excluding at least one 3D Gaussian splat from the set of 3D Gaussian splats for the frame and/or merging two or more neighboring 3D Gaussian splats to generate a new 3D Gaussian splat that is included in the set of 3D Gaussian splats for the frame. Two or more neighboring 3D Gaussian splats may be merged, for example, by generating a new 3D Gaussian splat having a position that is the mean of the positions of the merged 3D Gaussian splats, a color that is the mean of the colors of the merged 3D Gaussian splats and an orientation that depends on the positions and orientations of the merged 3D Gaussian splats.

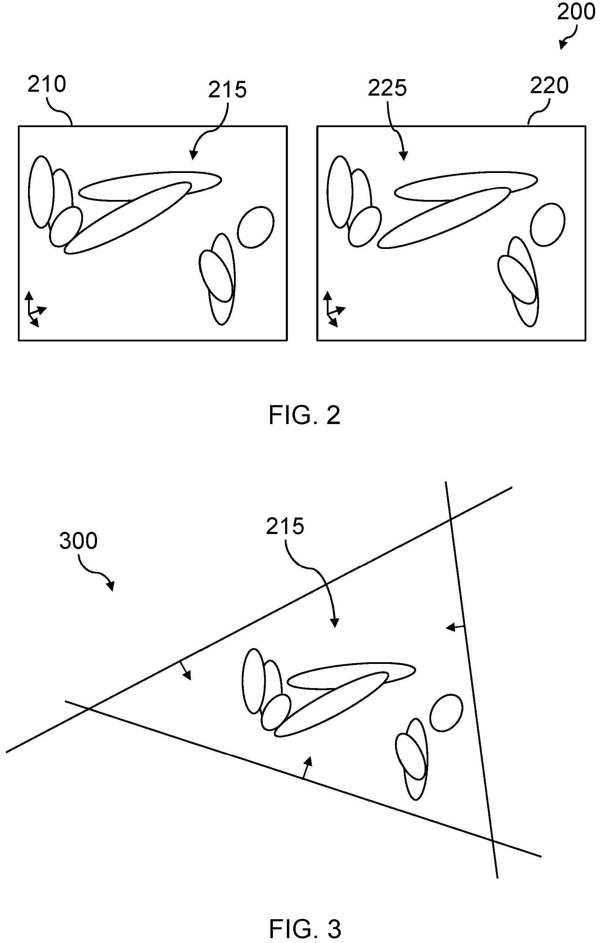

Fig. 2 illustrates an example sequence of frames 200, comprising a first frame 210 and a second frame 220. The first frame comprises a first set of 3D Gaussian splats 215, while the second frame comprises a second set of 3D Gaussian splats 225, representing the same 3D scene as the first set at a different moment in time.

In the example shown in Fig. 2, the second set of 3D Gaussian splats 225 comprises the same number of 3D Gaussian splats as the first set of 3D Gaussian splats, and each 3D Gaussian splat in the first set has a corresponding 3D Gaussian splat in the second set. Some 3D Gaussian splats in the second set have a slight different position and/or orientation to the corresponding 3D Gaussian splat in the first set, due to movement and/or rotation of an object in the 3D scene represented by the 3D Gaussian splat. The skilled person will appreciate that, in some cases, the second set of 3D Gaussian splats may have a different number of 3D Gaussian splats to the first set. The second set may include one or more 3D Gaussian splats that do not correspond to any 3D Gaussian splat in the first set (e.g. due to an object appearing in the 3D scene), and/or the first set may include one or more 3D Gaussian splats that do not correspond to any 3D Gaussian splat in the second set (e.g. due to an object leaving the 3D scene). In some cases, the number of splats representing a particular object in the 3D scene may be different in the first set to the second set. For instance, if an object is closer at the second moment in time to the cameras that acquired the image frames of the scene used to generate the sets of 3D Gaussian splats, the second set may include a greater number of 3D Gaussian splats for the object, as a result of the more detailed texture information available for the object when generating the second set.

Returning to Fig. 1, having obtained the sequence of frames, steps 120 to 150 of the method 100 are carried out for the first frame.

At step 120, a first plurality of data structures is defined for the first frame. The step of defining the first plurality of data structures for the first frame comprises defining a number of data structures in the first plurality and a number of data entries in each data structure. The number of data structures in the first plurality may depend on a desired complexity. In some examples, a loss term may be used to determine a reduction in bit rate provided by a number of data structures. The number of data structures in the first plurality may be defined as the lowest number of data structures for which the difference in the reduction in bit rate (compared with having one fewer data structures) falls below a predetermined threshold.

At step 130, each 3D Gaussian splat in the first set is assigned to one of the data structures in the first plurality. In some examples, steps 120 and 130 may be performed concurrently; in other words, the first plurality of data structures may be defined by dividing the 3D Gaussian splats in the first set into different groups.

Various techniques for defining the first plurality of data structures and assigning each 3D Gaussian splat in the first set is assigned to one of the data structures in the first plurality are envisaged.

For instance, the assignment of the 3D Gaussian splats in the first set to the data structures in the first plurality may be arbitrary, in which case, the first plurality of data structures may be defined by defining a number of data structures and a number of data entries in each data structure such that the total number of data entries is at least equal to a required total number of data entries. The 3D Gaussian splats may then be arbitrarily assigned to the data structures in the first plurality (e.g. the 3D Gaussian splats may be divided equally among the data structures). In some examples, the 3D Gaussian splats may be assigned to data structures according to size (e.g. such that the largest 3D Gaussian splats are in one data structure and the smallest 3D Gaussian splats are in another data structure).

The total number of data entries in the first plurality of data structures is typically greater than the number of 3D Gaussian splats in the first set, as the number of data entries in each data structure and the number of data structures are fixed across the sequence of frames, as described in more detail below. The required total number of data entries may be the number of 3D Gaussian splats in the set of 3D Gaussian splats in the sequence of frames that has the greatest number of 3D Gaussian splats, if this information is available when defining the first plurality of data structures. If this information is not available when defining the first plurality of data structures, the required total number of data entries may depend on a desired bit rate, a desired complexity and/or a desired image quality (of images generated by decoding a bitstream encoded using the method 100).

In some examples, at least one data structure in the first plurality may correspond to a region of the 3D scene. Thus, the step 120 of defining the first plurality of data structures may comprise defining, for at least one data structure, a correspondence between the data structure and a region of the 3D scene.

For instance, the first plurality of data structures may be defined by first defining an overall volume enclosing the first set of 3D Gaussian splats. The overall volume may then be divided into a plurality of sub-volumes, and a data structure may be defined for each sub-volume. In other words, the overall volume may be divided into a plurality of sub-volumes such that the number of sub-volumes corresponds to a desired number of data structures. Each 3D Gaussian splat in the first set is then assigned to the data structure corresponding to the sub-volume in which the center of the 3D Gaussian splat is positioned.

Any suitable technique may be used to define an overall volume enclosing the first set of 3D Gaussian splats. The defined overall volume may be finite or infinite, as appropriate (i.e. the overall volume may be bound in zero, one, two or three dimensions). For instance, the overall volume may be defined by zero or more constructive solid geometry (CSG) primitives (e.g. using half-spaces).

Fig. 3 illustrates an example overall volume 300 enclosing the first set of 3D Gaussian splats 215 belonging to the first frame 210 in the example of Fig. 2. The overall volume 300 is defined by the intersection of three half-spaces, and is unbounded in the direction perpendicular to the page (extending to the horizon).

The overall volume may be divided into a plurality of sub-volumes using any suitable technique. For instance, the overall volume may be divided into sub-volumes using a three-dimensional grid (with each cell of the grid defining a respective sub-volume), using half-spaces to partition the overall volume, or using Voronoi partitioning.

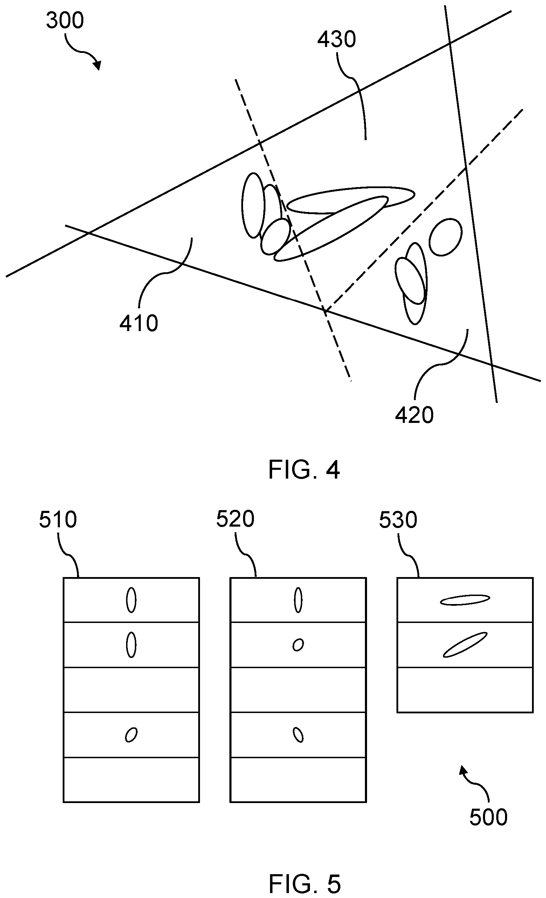

Fig. 4 illustrates an example of how the example overall volume 300 of Fig. 3 may be divided into sub-volumes. In Fig. 4, the overall volume 300 has been divided into three Voronoi cells 410, 420 and 430. The Voronoi cells 410, 420 and 430 have been defined by dividing the first set of 3D Gaussian splats 215 into groups of neighboring 3D Gaussian splats. For each group of neighboring 3D Gaussian splats, a Voronoi cell is defined such that, for any point in the Voronoi cell, the closest 3D Gaussian splat (according to the center position of the 3D Gaussian splat) is in the group of neighboring 3D Gaussian splats for the Voronoi cell.

Fig. 5 illustrates how the 3D Gaussian splats in the first set 215 are assigned to a first plurality of data structures 500, each data structure in the first plurality corresponding to a respective sub-volumes 410, 420 and 430. 3D Gaussian splats having their center position in the first sub-volume 410 are assigned to a first data structure 510; 3D Gaussian splats having their center position in the second sub-volume 420 are assigned to a second data structure 520; and 3D Gaussian splats having their center position in the third sub-volume 430 are assigned to a third data structure 530. Each data structure 510, 520, 530 has a higher number of data entries than the number of 3D Gaussian splats assigned to the respective data structure, so each data structure has at least one empty data entry. This allows a data structure having the same number of data entries to be used for another frame in the sequence for which a greater number of 3D Gaussian splats are in the same sub-volume.

In some examples, a region of the 3D scene corresponding to one data structure in the first plurality may overlap with a region of the 3D scene corresponding to another data structure in the first plurality. Overlapping regions may, for example, occur where at least one data structure corresponds to a region defining an object in the 3D scene, as described in more detail below. In some examples, overlapping regions may be used to separate out large 3D Gaussian splats. For instance, one data structure may correspond to the overall volume, and any 3D Gaussian splat that is larger than a predetermined size may be assigned to the data structure corresponding to the overall volume. If a 3D Gaussian splat that extends over several sub-volumes is assigned to a data structure corresponding to a sub-volume containing the center position of the 3D Gaussian splat, this data structure would need to be decoded even if the sub-volume corresponding to the data structure is not visible in a target viewport. Assigning 3D Gaussian splats over a certain size to a data structure corresponding to the overall volume reduces a likelihood that a data structure corresponding to a sub-volume will contain a 3D Gaussian splat extending over several sub-volumes, enabling sub-volumes outside a target viewport to be culled during decoding, as described in more detail below.

An alternative technique for reducing a likelihood that a data structure corresponding to a sub-volume will contain a 3D Gaussian splat extending over several sub-volumes is to replace any 3D Gaussian splat that is larger than a predetermined size with a plurality of smaller 3D Gaussian splats that approximate the appearance of 3D Gaussian splat being replaced. In this way, if a 3D Gaussian splat extends across more than one sub-volume, the appearance of the sub-volume may be reconstructed using only the 3D Gaussian splats assigned to the data structure for the sub-volume.

Defining an overall volume and dividing the overall volume into sub-volumes is only one example of how to define a plurality of data structures such that at least one data structure corresponds to a region in the 3D scene. In another example, one or more of the data structures in the first plurality may correspond to a region defined by a reference point, a reference plane or another reference surface (e.g. a reference sphere). For instance, if the first set of 3D Gaussian splats includes a number of 3D Gaussian splats that fit a plane (e.g. due to the presence of an object having a flat surface, such as a table, monitor, ceiling, wall, door, etc.), a data structure corresponding to a region defined by the plane may be defined, and 3D Gaussian splats that fit the plane may be assigned to the data structure.

As stated above, in some examples, at least one data structure in the first plurality may correspond to a region defining an object in the 3D scene. A region defining an object may, for example, be defined using a reference point or reference surface (for example, a center point of the object may be used as the reference point).

A region defining an object in the 3D scene may be identified using any suitable computer vision technique (e.g. using an object detection algorithm, an object recognition algorithm, or a segmentation algorithm), applied to the image frames used to generate the first set of 3D Gaussian splats, if these are available, or to a set of image frames synthesized using the first set of 3D Gaussian splats. Alternatively, a region defining an object in the 3D scene may be identified using depth information for the 3D scene.

In some examples, the 3D scene may be a sports scene, and at least one data structure in the first plurality may correspond to a sports player or a sports object in the scene. For example, if the 3D scene is a football (i.e. soccer) pitch and the sequence of frames represent the football pitch during a football game, a data structure may be defined for each player on the pitch, and a data structure may be defined for the ball.

In examples in which at least one data structure in the first plurality corresponds to a region defining an object in the 3D scene, the first plurality of data structures may further comprise one or more "background" data structures (i.e. one or more data structures that do not correspond to a particular object in the 3D scene). For instance, the first plurality of data structures may have several data structures, each of which corresponding to an object in the 3D scene, and a single background data structure, and any 3D Gaussian splat that does not belong to an object having a corresponding data structure may be assigned to the background data structure. Alternatively, the overall volume enclosing the first set of 3D Gaussian splats may be divided into a plurality of sub-volumes, each corresponding to a background data structure, and any 3D Gaussian splat that does not belong to an object having a corresponding data structure may be assigned to the background data structure corresponding to the sub-volume containing the center position of the 3D Gaussian splat.

Returning to Fig. 1, at step 140, for each 3D Gaussian splat in the first set, a set of parameters for the 3D Gaussian splat is added to the data structure to which the 3D Gaussian splat is assigned. The set of parameters for each 3D Gaussian splat may comprise the parameters for the 3D Gaussian splat listed in the first frame (e.g. position, orientation, scale, opacity and color).

In examples in which at least one data structure corresponds to a region of the 3D scene, the position of each 3D Gaussian splat in any data structure that corresponds to a region of the 3D scene may be defined in a local coordinate system for the region, to enable more efficient coding of the position. The definition of the local coordinate system may depend on the region to which the data structure corresponds (for instance, where a reference point is used, the local coordinate system may be defined such that the origin of the coordinate system is the reference point). Axes of the coordinate system may be oriented according to the shape of the region, for example, so that one axis corresponds to a longest possible extent of the region and another axis corresponds to a shortest possible extent of the region. In this way, more bits may be used for the axis corresponding to the longest possible extent, and fewer bits may be used for the axis corresponding to the shortest possible extent.

In some examples, some parameters in the set of parameters for one 3D Gaussian splat may be different parameters to the parameters in the set of parameters for another 3D Gaussian splat. For instance, some 3D Gaussian splats may be represented using a simple color model (e.g. RGB values), while other 3D Gaussian splats, particularly 3D Gaussian splats corresponding to non-Lambertian reflecting surfaces in the 3D scene, may be represented using a more complex color model (e.g. spherical harmonics).

At step 150, each data structure in the first plurality is encoded into a bitstream. In some examples, intra-coding may be used to improve efficiency. In other words, at least one data structure in the first plurality may be encoded such that the data structure contains a reference data entry and at least one further data entry. The set of parameters for each further data entry in each data structure in the first plurality is encoded with reference to the reference data entry in the same data structure, i.e. as a set of first residual parameters that, when added to the set of parameters in the reference data entry, define the 3D Gaussian splat assigned to the further data entry.

Steps 160 to 190 are carried out for the second frame in the sequence of frames. In some examples, particularly when processing the frames in real-time, steps 120 to 150 may be carried out for the first frame before performing steps 160 to 190 for the second frame. Alternatively, steps 120 to 150 may be interleaved with steps 160 to 190 (for instance, step 160 may be performed between steps 120 and 130, step 170 may be performed between steps 130 and 140, and step 180 may be performed between steps 140 and 150).

At step 150, a second plurality of data structures is defined. The second plurality is defined such that each data structure in the second plurality corresponds to a respective data structure in the first plurality, and such that corresponding data structures have the same number of data entries. In other words, for each data structure in the first plurality, a corresponding data structure having the same number of data entries is defined in the second plurality.

For instance, if the first plurality of data structures comprises a first data structure having a first number of data entries and a second data structure having a second number of data entries, the second plurality of data structures is defined such that the second plurality of data structures comprises a third data structure, corresponding to the first data structure and having the first number of data entries, and a fourth data structure, corresponding to the second data structure and having the second number of data entries.

How the data structures in the second plurality correspond to the data structures in the second plurality may depend on how the first plurality of data structures were defined and/or how the 3D Gaussian splats in the first set were assigned to the data structures in the first plurality. For example, if the assignment of the 3D Gaussian splats to the data structures in the first plurality was arbitrary, for each data structure in the first plurality, a data structure having the same number of data entries may be defined as the corresponding data structure in the second plurality; this then defines how the 3D Gaussian splats in the second set are assigned to the data structures in the second plurality, as described below. For any data structure in the first plurality that corresponds to a region of the 3D scene, the corresponding data structure in the second plurality corresponds to the same region of the 3D scene (or substantially the same region; in some examples, the boundary of a region of the 3D scene corresponding to a data structure may be slightly different for the data structure in the second plurality). It is to be understood that a "same region" of the 3D scene, in the case of a region defining an object in the scene, is a region defining the same object in the scene at the second moment in time, rather than a region of space in the 3D scene occupied by the object at the first moment in time (although there may be at least some overlap with the region of space in the 3D scene occupied by the object at the first moment in time).

At step 170, each 3D Gaussian splat in the second set is assigned to one of the data structures in the second plurality. Any 3D Gaussian splat in the second set that corresponds to a 3D Gaussian splat in the first set may be assigned to the data structure in the second plurality that corresponds to the data structure in the first plurality to which the corresponding 3D Gaussian splat belongs.

A 3D Gaussian splat in the second set may be identified as corresponding to a 3D Gaussian splat in the first set based at least on the positions of the 3D Gaussian splats. For instance, the 3D Gaussian splat in the second set having a closest position to the position of a 3D Gaussian splat in the first set may be identified as corresponding to the 3D Gaussian splat in the first set if the distance between the closest 3D Gaussian splat in the second set and the 3D Gaussian splat in the first set is less than a predetermined distance and/or if the color of the closest 3D Gaussian splat in the second set is sufficiently similar to the color of the 3D Gaussian splat in the first set.

In examples in which at least one data structure corresponds to a region of the 3D scene, a 3D Gaussian splat in the second set close to a region boundary may in some cases be positioned in a different region to the corresponding 3D Gaussian splat in the first set (according to the boundaries used to define the first plurality of data structures), due to movement in the 3D scene. In such a case, either the boundary of the region may be modified for the corresponding data structure in the second plurality, or the 3D Gaussian splat in the second set may be assigned to a different data structure in the second plurality that corresponds to the region in which the 3D Gaussian splat is now located (in which case the 3D Gaussian splat in the second set is no longer considered to correspond to a 3D Gaussian splat in the first set). Whether the region boundary is modified or the 3D Gaussian splat is assigned to a different data structure may depend on which of these is more efficient to code in a particular case.

In examples in which at least one data structure corresponds to a region defining an object in the 3D scene, a 3D Gaussian splat in the second set may only be identified as corresponding to a 3D Gaussian splat assigned to a data structure corresponding to a region defining an object if the 3D Gaussian splat in the second set is identified as belonging to the same object.

In some examples, any 3D Gaussian splat in the second set that corresponds to a 3D Gaussian splat in the first set may be assigned to a corresponding data entry (in the corresponding data structure in the first plurality) to the corresponding 3D Gaussian splat in the first set. In other words, corresponding 3D Gaussian splats may be assigned to corresponding positions in the data structures to which they are assigned. This allows corresponding 3D Gaussian splats to be more easily identified by a decoder, and facilitates encoding the parameters of a 3D Gaussian splat in the second set with respect to the parameters of the corresponding 3D Gaussian splat in the first set, as described in more detail below.

For any 3D Gaussian splat in the second set that does not correspond to a 3D Gaussian splat in the first set, how the 3D Gaussian splat in the second set is assigned to a data structure in the second plurality may depend on how the data structures have been defined. For instance, if the assignment of 3D Gaussian splats in the first set were arbitrarily assigned to data structures in the first plurality, any 3D Gaussian splat in the second set that does not correspond to a 3D Gaussian splat in the first set may be assigned arbitrarily to an empty data entry in the second plurality of data structures. If a 3D Gaussian splat in the second set that does not correspond to a 3D Gaussian splat in the first set belongs to a region of the 3D scene represented by a data structure in the second plurality (e.g. a sub-volume of the overall volume or a region defining an object in the 3D scene), the 3D Gaussian splat is assigned to an empty data entry in the data structure corresponding to the region.

In examples in which at least one data structure corresponds to a region defining an object in the 3D scene, the number of 3D Gaussian splats used to represent an object in the first set may be different to the number of 3D Gaussian splats used to represent the same object in the second set. If the number of 3D Gaussian splats used to represent an object is greater in the second set, for each 3D Gaussian splat in the first set, a most similar 3D Gaussian splat in the second set (e.g. based on position, and optionally color) may be considered the corresponding 3D Gaussian splat and assigned to the corresponding data entry in the corresponding data structure. The remaining 3D Gaussian splats for the object in the second set (i.e. any 3D Gaussian splats for the object that are not identified as the corresponding 3D Gaussian splat for one of the 3D Gaussian splats in the first set) may each be assigned to an empty data entry in the corresponding data structure.

In some cases, the number of data entries in a data structure corresponding to a region of the 3D scene may be less than the number of 3D Gaussian splats in the region in the second set. In such cases, one or more 3D Gaussian splats in the region may be removed from the second set and/or two or more neighboring 3D Gaussian splats may be replaced with a new 3D Gaussian splat generated by merging the two or more neighboring 3D Gaussian splats. For any 3D Gaussian splat in the first set that does not have a corresponding 3D Gaussian splat in the corresponding data structure in the second plurality, the corresponding data entry in the corresponding data structure in the second plurality may be left empty. At step 180, for each 3D Gaussian splat in the second set, a set of parameters for the 3D Gaussian splat is added to the data structure to which the 3D Gaussian splat is assigned. The parameters for the 3D Gaussian splats in the data structures of the second plurality may be the same parameters used for the 3D Gaussian splats in the data structures of the first plurality (e.g. position, orientation, scale, opacity and color), but this is not necessarily always the case. For instance, some 3D Gaussian splats may be represented using a simple color model (e.g. RGB values), while other 3D Gaussian splats may be represented using a more complex color model (e.g. spherical harmonics).

At step 190, each data structure in the second plurality is encoded into the bitstream. In some examples, inter-coding may be used to improve efficiency. In other words, the set of parameters for at least one 3D Gaussian splat in the second set may be encoded with reference to the corresponding data entry in the corresponding data structure in the first plurality, i.e. encoded as a set of second residual parameters that, when added to the set of parameters for the corresponding data entry in the corresponding data structure in the first plurality, defines the 3D Gaussian splat in the second set.

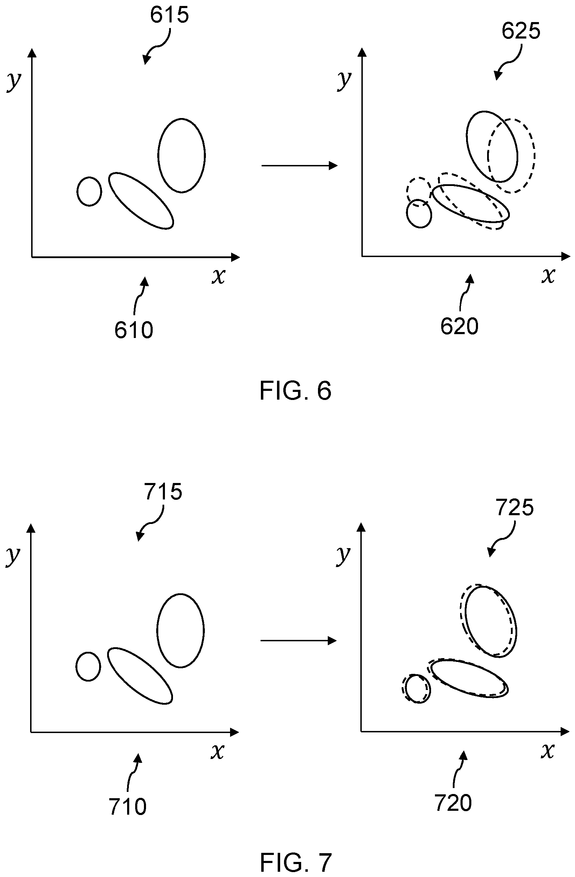

Fig. 6 illustrates how parameters in at least one data structure in the second plurality may be encoded with reference to parameters in the first plurality. Fig. 6 shows a first group of 3D Gaussian splats 615 in a first frame 610 assigned to a data structure in the first plurality, and a second group of 3D Gaussian splats 625 in a second frame 620 assigned to a corresponding data structure in the second plurality. The second frame 620 illustrates the second group of 3D Gaussian splats 625 using a solid line, as well as the first group of 3D Gaussian splats using a dashed line (in order to show more clearly the positions and orientations of each 3D Gaussian splat in the second group relative to the 3D Gaussian splats in the first group).

Each 3D Gaussian splat in the second group corresponds to a respective 3D Gaussian splat in the first group, with the corresponding splats having the same shape as one another but a slightly different position and orientation. For each 3D Gaussian splat in the second group 625, a change in position and orientation, with respect to the corresponding splat in the first group 615, may be determined and encoded as a set of second residual parameters.

In some examples, a 3D Gaussian splat in the second set that does not correspond to a 3D Gaussian splat may also be encoded using a set of second residual parameters that is to be added to the set of parameters for a 3D Gaussian splat in the corresponding data structure in the first plurality (for instance, a 3D Gaussian splat that has similar parameters), if this enables the set of parameters to be encoded more efficiently. This may, for example, occur in cases where the number of 3D Gaussian splats representing an object is greater in the second set than the first; any 3D Gaussian splat belonging to the object that does not correspond to a 3D Gaussian splat in the first set may be encoded with reference to a similar 3D Gaussian splat belonging to the object in the first set. Instructions identifying the data entry to which the set of second residual parameters is to be added may also be encoded into the bitstream.

In some examples, for at least one data structure in the second plurality that has second residual parameters, at least one shared residual parameter for the data structure may be encoded into the bitstream. Each shared residual parameter may define a transformation (e.g. a translation or a rotation) that is applied to the data structure as a whole before adding the set of second residuals to each data entry in the data structure. At least one shared parameter may be used, in particular, for data structures that define a region defining an object in the 3D scene.

Fig. 7 illustrates how at least one shared residual parameter may be used to transform the parameters for all 3D Gaussian splats in a data structure. Fig. 7 shows a first group of 3D Gaussian splats 715 in a first frame 710 assigned to a data structure in the first plurality, and a second group of 3D Gaussian splats 725 in a second frame 720 assigned to a corresponding data structure in the second plurality.

The first group of 3D Gaussian splats 715 and the second group of 3D Gaussian splats 725 are identical to the first group 615 and second group 625 shown in Fig. 6. However, in Fig. 7, the second frame 720, as well as illustrating the second group of 3D Gaussian splats 725 using a solid line, illustrates a transformation of the first group of 3D Gaussian splats using a dashed line. The dashed lines illustrate the first group of 3D Gaussian splats after the group as a whole has been rotated and translated. By applying the same transformation to the entire group, the changes in position and orientation that need to be applied to each individual 3D Gaussian splat to achieve the position and orientation of the corresponding 3D Gaussian splat in the second group is much smaller, allowing the information to be encoded more efficiently.

Additionally or alternatively, at least one data entry in at least one data structure in the second plurality may be encoded with reference to another data entry (i.e. a reference data entry) in the same data structure, as described above with reference to the first plurality of data structures. This may, for example, be the case for a data entry for a 3D Gaussian splat in the second set that does not correspond to a 3D Gaussian splat in the first set.

It will be understood that, where the sequence of frames comprises more than two frames (i.e. the sequence further comprises one or more further frames), steps 160 to 190 may additionally be carried out for each further frame in the sequence. In this way, for each frame in the sequence other than the first frame, a respective plurality of data structures is defined, each data structure in the respective plurality corresponding to a data structure in the first plurality and having the same number of data entries as the corresponding data structure in the first plurality. The 3D Gaussian splats in the set of 3D Gaussian splats for each further frame may then be assigned to the data structures in the respective plurality for the further frame, a set of parameters for each 3D Gaussian splat may be added to the data structure to which the 3D Gaussian splat is assigned, and each data structure in the respective plurality is encoded into the bitstream, as described above with reference to the second set of 3D Gaussian splats.

As with the second set of 3D Gaussian splats, the set of parameters for at least one 3D Gaussian splat in any further set of 3D Gaussian splat may be encoded with reference to the corresponding data entry in the corresponding data structure in another plurality of data structures (e.g. the first plurality of data structures or a plurality of data structures for an immediately preceding frame). Similarly, at least one data entry in at least one data structure in any further plurality of data structures may be encoded with reference to another data entry in the same data structure.

The method 100 may further comprise a step of encoding metadata into the bitstream. The metadata may, for example, comprise the number of data structures per frame and/or the number of data entries in each data structure (alternatively, one or both of these may be provided by external means). In some examples, the metadata may indicate, for each data structure in the second plurality, which data structure in the first plurality is the corresponding data structure (alternatively, this information may be made available to a decoding apparatus by the ordering of the data structures within the bitstream). If the encoding of the data structures used intra-coding and/or inter-coding, the metadata may comprise instructions enabling a decoding apparatus to reconstruct the full parameters of each 3D Gaussian splat (e.g. identifying a reference splat in a data structure).

In some examples, where at least one data structure corresponds to a region of the 3D scene, the metadata may comprise information defining the region of the 3D scene that corresponds to the at least one data structure. For instance, if an overall volume enclosing the set of 3D Gaussian splats has been divided into sub-volumes, the metadata may comprise information defining the overall volume and how the overall volume was divided into sub-volumes. If the overall volume and/or the boundaries of the sub-volumes is different for the second frame, the metadata may further comprise updates to the overall volume and/or the boundaries of the sub-volumes, as appropriate.

If at least one data structure corresponds to a region defining an object in the 3D scene, information identifying the object to which the data structure corresponds may be encoded into the bitstream. Information identifying the object to which the data structure corresponds may include at least a position of the object within the 3D scene. In some examples, the information identifying the object may also include a semantic label for the object (e.g. identifying a type of object) and/or an object ID for the object (e.g. in order to distinguish between different instances of a same type of object).

In examples in which any 3D Gaussian splat that is larger than a predetermined size is replaced with a plurality of smaller 3D Gaussian splats, the metadata may comprise the predetermined size. This enables the greatest extent of a region corresponding to a data structure to be determined by a decoder (i.e. assuming that a 3D Gaussian splat having the predetermined size is located at a boundary of the region). Similarly, in examples in which any 3D Gaussian splat that is larger than a predetermined size is assigned to a data structure corresponding to the overall volume, the metadata may comprise the predetermined size and an indication of the data structure(s) for which 3D Gaussian splats larger than the predetermined size are excluded.

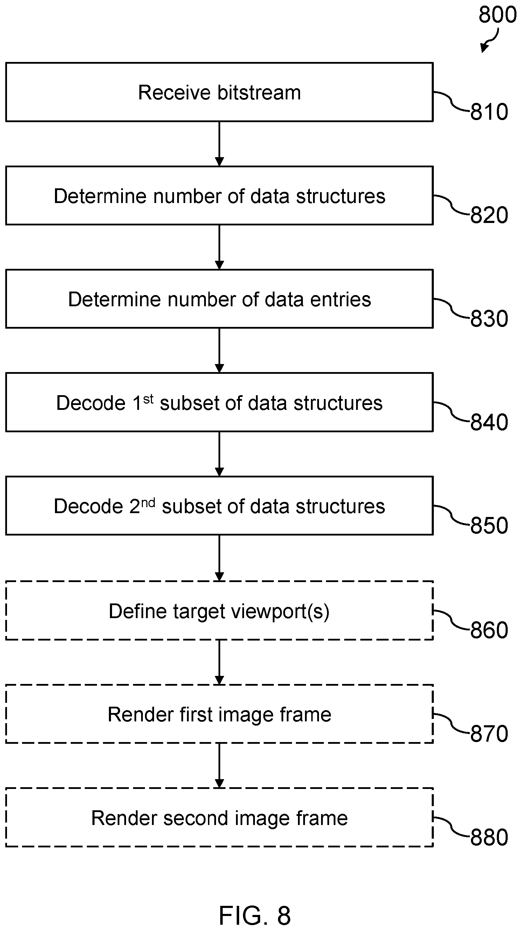

Fig. 8 illustrates a method 800 for decoding a dynamic representation of a 3D scene, according to an embodiment of the invention.

The method 800 begins at step 810, at which a bitstream is received. The bitstream comprises a first plurality of encoded data structures for a first frame of a 3D scene and a second plurality of encoded data structures for a second frame of the 3D scene. Each data structure in the second plurality corresponds to a respective data structure in the first plurality. Thus, the first plurality of encoded data structures and the second plurality of encoded data structures each have the same number of data structures. Corresponding data structures have the same number of data entries as one another (i.e. each data structure in the second plurality has the same number of data entries as the corresponding data structure in the first plurality).

Each data entry in each encoded data structure in the first plurality comprises a set of parameters for a respective 3D Gaussian splat in a first set of 3D Gaussian splats representing the 3D scene at a first moment in time, and each data entry in each encoded data structure in the second plurality comprises a set of parameters for a respective 3D Gaussian splat in a second set of 3D Gaussian splats representing the 3D scene at a second, different moment in time.

In some examples, the bitstream may comprise one or more further pluralities of encoded data structures, each for a respective frame of the 3D scene (i.e. each data entry in each encoded data structure in a further plurality comprises a set of parameters of a respective 3D Gaussian splat in a further set of 3D Gaussian splats representing the 3D scene at a further moment in time). In these examples, each further plurality of encoded data structures has the same number of data structures as the first plurality of encoded data structures, and each data structure in a further plurality of encoded data structures corresponds to a respective data structure in the first plurality and has the same number of data entries as the corresponding data structure in the first plurality.

In some examples, the bitstream may further comprise metadata. The metadata may, for example, comprise one or more of: the number of data structures per frame; the number of data entries in each data structure; an indication of which data structure in the first plurality each data structure in the second plurality corresponds to; information identifying a reference splat in a data structure; and/or information defining a region of the 3D scene that corresponds to a data structure.

The bitstream may have been encoded using the method described above with reference to Fig. 1.

At step 820, the number of data structures per frame is determined. Where the number of data structures per frame is encoded as metadata in the bitstream, the number of data structures per frame may be determined by decoding the metadata. Alternatively, the number of data structures per frame may be available by external means.

At step 830, the number of data entries in each data structure is determined. Where the number of data entries in each data structure is encoded as metadata in the bitstream, the number of data entries in each data structure may be determined by decoding the metadata. Alternatively, the number of data entries in each data structure may be available by external means.

At step 840, a first subset of data structures in the first plurality of encoded data structures is decoded. In some examples, the first subset of data structures may include all data structures in the first plurality (i.e. all data structures in the first plurality may be decoded). Alternatively, one or more data structures may be excluded from the first subset. This may, for example, be the case where at least one data structure corresponds to a region of the 3D scene (which may be indicated in metadata encoded in the bitstream). If at least one data structure in the first plurality corresponds to a region of the 3D scene, any data structure corresponding to a region of the 3D scene may be excluded from the first subset (and therefore not decoded) if the region to which the data structure corresponds is determined not to be visible in a target viewport for the frame and the data structure is determined not to be required for decoding another data structure that corresponds to a region of the 3D scene that is visible in a target viewport for the frame to which the other data structure belongs (which may occur if another data structure, e.g. in the second plurality of data structures, is encoded with reference to the data structure in the first plurality). In some examples, a data structure that is not visible in a target viewport for the frame to which the data structure belongs but is required for decoding another data structure may be decoded immediately before decoding the other data structure, in order to reduce decoding complexity. Thus the decoding of the data structure is postponed until it is known that the data structure is (indirectly) required for constructing the decoder output. This reduces complexity because fewer data structures are decoded on average. A data structure that is required for decoding another data structure may be identified based on metadata encoded into the bitstream indicating that the data structure is required for decoding another data structure.

In some examples, at least one data structure in the first plurality may contain a reference data entry and at least one further data entry containing a set of first residual parameters, as described above. The step of decoding the first subset of data structures in the first plurality of encoded data structures may then comprise, for each data structure containing a reference data entry and at least one further data entry, identifying the reference data entry and, for each further data entry, adding the set of first residual parameters to the set of parameters in the reference data entry to obtain a set of parameters for the further data entry that, by itself, defines the 3D Gaussian splat corresponding to the further data entry. The reference data entry may be identified based on metadata encoded in the bitstream indicating the position of the reference data entry in each data structure having a reference data entry. Alternatively, a predetermined rule may be applied (for instance, the first data entry in each data structure in the first plurality may be a reference data entry).

At step 850, a second subset of data structures in the second plurality of encoded data structures is decoded. The first and second subsets are such that, for each data structure in the second subset, the corresponding data structure is included in the first subset.

For instance, where the first subset includes all data structures in the first plurality, the second subset may include all data structures in the second plurality. If at least one data structure in the second plurality corresponds to a region of the 3D scene, any data structure corresponding to a region of the 3D scene may be excluded from the second subset (and therefore not decoded) if the region to which the data structure corresponds is determined not to be visible in a target viewport for the frame and the data structure is determined not to be required for decoding another data structure that corresponds to a region of the 3D scene that is visible in a target viewport for the frame to which the other data structure belongs.

In some examples, at least one set of parameters in at least one data structure in the second plurality may be a set of second residual parameters, as described above. Data structures containing second residual parameters (and any data entry containing second residual parameters) may be identified based on metadata encoded into the bitstream or using a predetermined rule (for instance, all data entries in the second plurality may contain second residual parameters unless the corresponding data entry in the first plurality is empty). The step of decoding the second subset of data structures in the second plurality of encoded data structures may then comprise, for each data entry having a set of second residual parameters, adding the set of second residual parameters to the set of parameters for the corresponding data entry in the corresponding data structure in the first plurality.

In some examples, the bitstream may further comprise, for at least one data structure in the second plurality, at least one shared residual parameter, as described above. The step of decoding the second subset of data structures in the second plurality of encoded data structures may then comprise, for each data structure having at least one shared residual parameter, transforming the set of parameters for each data entry in the corresponding data structure in the first plurality based on the at least one shared residual parameter, before adding the respective set of second residual parameters to each transformed set of parameters.

It will be understood that, where the bitstream comprises one or more further pluralities of data structures, each for a respective further frame of the 3D scene, the method 800 may further comprise, for each further plurality, a step of decoding a further subset of data structures in the respective further plurality of encoded data structures.

In some examples, different data structures in the same subset may be decoded in parallel. In other words, a first data structure in the first subset may be decoded by a first decoder, while a second data structure in the first subset may be decoded by a second, different decoder. Each data structure in the second subset (and, where relevant, in any further subset) may then be decoded by the decoder that decoded the corresponding data structure in the first subset. In this way, any data entry that is encoded with reference to a corresponding data entry in the corresponding data structure is decoded by the same decoder as the corresponding data entry.

It is to be understood that the second decoder is different to the first decoder in the sense that the first and second decoder are different decoder instances. The second decoder may be functionally identical to the first decoder.

In some examples, the method 800 may further comprise a step 860 of defining at least one target viewport for each frame. In some examples, step 860 may be performed before carrying out steps 840 and 850 (for instance, if at least one data structure corresponds to a region of the 3D scene, the target viewpoint may be determined before decoding the first and second subset of data structures in order to determine which data structures need to be included in the first and second subset).

In some examples, the render rate may be higher than the frame rate of the bitstream, in which case more than one target viewpoint may be defined for at least one frame. In some examples, the render rate may be variable, in which case the number of target viewpoints may be different for different frames.

In some examples, the method 800 may further comprise a step 870 of processing at least some of the decoded data structures in the first subset to render, for each target viewport for the first frame, a first image frame in the target viewport for the first frame. In some examples, all of the decoded data structures in the first subset may be processed to render the first image frame in each target viewport. Alternatively, if at least one data structure in the first subset corresponds to a region of the 3D scene, only data structures in the first subset that are determined to be visible in the target viewport may be processed to render the first image frame in the target viewport (in other words, any data structure corresponding to a region that is not visible in the target viewport is not used to render the first image frame in the target viewport).

In some examples, the method 800 may further comprise a step 880 of processing at least some of the decoded data structures in the second subset to render, for each target viewport for the second frame, a second image frame in the target viewport for the second frame. As with the first frame, in some examples, all of the decoded data structures in the second subset may be processed to render the second image frame in each target viewport. Alternatively, if at least one data structure in the second subset corresponds to a region of the 3D scene, only data structures in the first subset that are determined to be visible in the target viewport may be processed to render the first image frame in the target viewport (in other words, any data structure corresponding to a region that is not visible in the target viewport is not used to render the first image frame in the target viewport).

It will be understood that, where the bitstream comprises one or more further pluralities of data structures, each for a respective further frame of the 3D scene, the method 800 may further comprise, for each further frame, a step of processing at least some of the decoded data structures in the respective further subset to render a further image frame in the target viewport for the further frame.

In some examples, different data structures in the same subset may be rendered in parallel. In other words, a first data structure in the first subset may be rendered by a first renderer, while a second data structure in the first subset may be rendered by a second, different renderer. Each data structure in the second subset (and, where relevant, in any further subset) may then rendered by the renderer that rendered the corresponding data structure in the first subset.

It is to be understood that the second renderer is different to the first renderer in the sense that the first and second renderer are different renderer instances. The second renderer may be functionally identical to the first renderer.

In some examples, at least some data structures in the same subset may be rendered by the same renderer. If data structures in the same subset that are rendered by the same renderer overlap in the target viewport, the render order must be determined (e.g. by sorting front-to-back) before rendering the data structures.

The output of each renderer for each image frame is a region in a frame buffer with at least color and density information. The regions may then be combined by a compositor to determine an output color value for each pixel in the image frame.

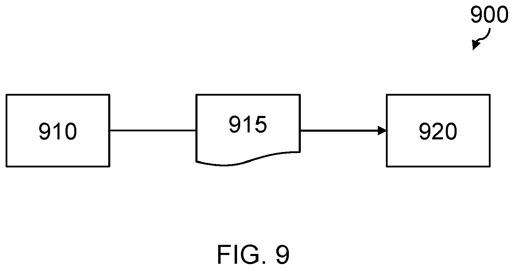

Fig. 9 illustrates a pipeline 900 for transmitting dynamic representation of a 3D scene. The pipeline comprises an encoding apparatus 910 and a decoding apparatus 920. The encoding apparatus is configured to output a bitstream 915, which is received by the decoding apparatus. In Fig. 9, the bitstream 915 is transmitted directly from the encoding apparatus to the decoding apparatus; however, as the skilled person will readily appreciate, the bitstream may alternatively be stored on a suitable storage medium before being transmitted to the decoding apparatus.

The bitstream 915 is, itself, an embodiment of the invention. The bitstream comprises a first plurality of encoded data structures for a first frame of a 3D scene and a second plurality of encoded data structures for a second frame of the 3D scene. Each data entry in each encoded data structure in the first plurality comprises a set of parameters for a respective 3D Gaussian splat in a first set of 3D Gaussian splats representing the 3D scene at a first moment in time. Each data entry in each encoded data structure in the second plurality comprises a set of parameters for a respective 3D Gaussian splat in a second set of 3D Gaussian splats representing the 3D scene at a second, different moment in time. Each data structure in second plurality corresponds to a respective data structure in the first plurality and has the same number of data entries as the corresponding data structure in the first plurality.

The bitstream 915 may further comprise encoded metadata. The encoded metadata may, for example, comprise one or more of: the number of data structures per frame; the number of data entries in each data structure; an indication of which data structure in the first plurality each data structure in the second plurality corresponds to; information identifying a reference splat in a data structure; and/or information defining a region of the 3D scene that corresponds to a data structure.

The encoding apparatus 910 may be configured to generate the bitstream 915 using the method 100 described above with reference to Fig. 1.

The decoding apparatus 920 is configured to receive and decode the bitstream 915. The decoding apparatus may be configured to decode the apparatus using the method 800 described above with reference to Fig. 8. In some examples, the decoding apparatus may comprise a plurality of decoders in order to decode data structures in the same plurality in parallel to one another, as described above.

In some examples, the decoding apparatus may be further configured to render one or more image frames of the scene (for instance, by carrying out steps 860 to 880 of the method 800). For example, the decoding apparatus may comprise one or more renderers. In some examples, the decoding apparatus may comprise a plurality of renderers in order to process data structures in the same plurality in parallel to one another, as described above. If the decoding apparatus comprises a plurality of renderers, the decoding apparatus may further comprise a compositor for combining the outputs of different renderers.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

The following embodiments are disclosed:
1. A method for decoding a dynamic representation of a 3D scene, the method comprising:
   receiving a bitstream comprising:
      a first plurality of encoded data structures for a first frame of a 3D scene including a first data structure and a second data structure, wherein each data entry in each encoded data structure in the first plurality comprises a set of parameters for a respective 3D Gaussian splat in a first set of 3D Gaussian splats representing the 3D scene at a first moment in time; and
      a second plurality of encoded data structures for a second frame of the 3D scene, wherein each data entry in each encoded data structure in the second plurality comprises a set of parameters for a respective 3D Gaussian splat in a second set of 3D Gaussian splats representing the 3D scene at a second, different moment in time, and wherein each data structure in the second plurality corresponds to a respective data structure in the first plurality and has the same number of data entries as the corresponding data structure in the first plurality;
   determining the number of data structures per frame and the number of data entries in each data structure;
   decoding a first subset of data structures in the first plurality of encoded data structures; and
   decoding a second subset of data structures in the second plurality of encoded data structures.
2. The method of embodiment 1, wherein, for each data structure in the second subset, the corresponding data structure is included in the first subset.
3. The method of embodiment 2, wherein:
   the first data structure in the first subset is decoded by a first decoder;
   the second data structure in the first subset is decoded by a second, different decoder; and
   each data structure in the second subset is decoded by the decoder that decoded the corresponding data structure in the first subset.
4. The method of any of embodiments 1 to 3, wherein:
   at least one data structure corresponds to a region of the 3D scene;
   the method further comprises defining a target viewport for each frame; and
   for any data structure that corresponds to a region of the 3D scene, the data structure is only included in the first or second subset if the data structure corresponds to a region of the 3D scene that is determined to be visible in the target viewport and/or is identified as being required for decoding a data structure corresponding to a region of the 3D scene that is visible in the target viewport.
5. The method of any of embodiments 1 to 4, wherein the method comprises:
   defining a target viewport for each frame;
   processing at least some of the decoded data structures in the first subset to render a first image frame in the target viewport for the first frame; and
   processing at least some of the decoded data structures in the second subset to render a second image frame in the target viewport for the second frame.
6. The method of embodiment 5, wherein:
   for each data structure in the second subset, the corresponding data structure is included in the first subset;
   the first data structure in the first subset is rendered by a first renderer;
   the second data structure in the first subset is rendered by a second, different renderer; and
   each data structure in the second subset is rendered by the renderer that rendered the corresponding data structure in the first subset.
7. The method of embodiment 5 or 6, wherein:
   at least one data structure corresponds to a region of the 3D scene; and
   for each image frame, a data structure that corresponds to a region of the 3D scene is processed to render the image frame only if the data structure is determined to correspond to a region of the 3D scene that is visible in the target viewport.
8. The method of any of embodiments 1 to 7, wherein:
   at least one data structure in the first plurality contains a reference data entry and at least one further data entry, wherein the set of parameters for each further data entry is a set of first residual parameters; and
   the step of decoding the first subset of data structures in the first plurality of encoded data structures comprises, for each data structure containing a reference data entry and at least one further data entry:
      identifying the reference data entry; and
      for each further data entry, adding the set of first residual parameters to the set of parameters in the reference data entry.
9. The method of any of embodiments 1 to 8, wherein:
   for each data structure in the second subset, the corresponding data structure is included in the first subset;
   at least one set of parameters in at least one data structure in the second plurality is a set of second residual parameters; and
   the step of decoding the second subset of data structures in the second plurality of encoded data structures comprises, for each data entry having a set of second residual parameters, adding the set of second residual parameters to the set of parameters for the corresponding data entry in the corresponding data structure in the first plurality.
10. The method of embodiment 9, wherein:
   the bitstream further comprises, for at least one data structure in the second plurality, at least one shared residual parameter; and
   the step of decoding the second subset of data structures in the second plurality of encoded data structures comprises, for each data structure having at least one shared residual parameter, transforming the set of parameters for each data entry in the corresponding data structure in the first plurality based on the at least one shared residual parameter before adding the set of second residual parameters.
11. A method for encoding a dynamic representation of a 3D scene, the method comprising:
   obtaining a sequence of frames of a 3D scene, the sequence comprising:
      a first frame including a first set of 3D Gaussian splats representing the 3D scene at a first moment in time; and
      a second frame including a second set of 3D Gaussian splats representing the 3D scene at a second, different moment in time;
   for the first frame:
      defining a first plurality of data structures;
      assigning each 3D Gaussian splat in the first set to one of the data structures in the first plurality;
      for each 3D Gaussian splat in the first set, adding a set of parameters for the 3D Gaussian splat to the data structure to which the 3D Gaussian splat is assigned; and
      encoding, into a bitstream, each data structure in the first plurality; and
   for the second frame:
      defining a second plurality of data structures, wherein each data structure in the second plurality corresponds to a respective data structure in the first plurality, and wherein each data structure in the second plurality has the same number of data entries as the corresponding data structure in the first plurality;
      assigning each 3D Gaussian splat in the second set to one of the data structures in the second plurality;
      for each 3D Gaussian splat in the second set, adding a set of parameters for the 3D Gaussian splat to the data structure to which the 3D Gaussian splat is assigned; and
      encoding, into the bitstream, each data structure in the second plurality.
12. The method of embodiment 11, wherein any 3D Gaussian splat in the second set that corresponds to a 3D Gaussian splat in the first set is assigned to a corresponding data entry in the data structure in the second plurality that corresponds to the data structure in the first plurality to which the corresponding 3D Gaussian splat in the first set was assigned.
13. The method of embodiment 12, wherein the step of encoding, into the bitstream, each data structure in the second plurality comprises:
   for any 3D Gaussian splat in the second set that corresponds to a 3D Gaussian splat in the first set, defining a set of second residual parameters that, when added to the set of parameters for the corresponding 3D Gaussian splat in the first set, defines the 3D Gaussian splat in the second set; and
   encoding, into the bitstream, each set of second residual parameters as the data entry for the 3D Gaussian splat to which the set of second residual parameters belongs.
14. The method of any of embodiments 11 to 13, wherein the step of encoding, into a bitstream, each data structure in the first plurality comprises, for each data structure:
   selecting a data entry in the data structure as a reference data entry;
   for each other data entry in the data structure, defining a set of first residual parameters that, when added to the set of parameters in the reference data entry, defines the 3D Gaussian splat assigned to the data entry; and
   encoding, into the bitstream, the set of parameters for the reference data entry and the set of first residual parameters for each other data entry.
15. The method of any of embodiments 11 to 14, wherein at least one data structure corresponds to a region of the 3D scene.
16. The method of embodiment 15, wherein at least one data structure corresponds to a region defining an object in the 3D scene.
17. The method of embodiment 16, wherein at least one data structure corresponds to a sports player or sports object in the scene.
18. The method of any of embodiments 11 to 17, wherein:
   the first frame and the second frame each include at least one further 3D Gaussian splat; and
   the method further comprises:
      identifying which of the 3D Gaussian splats included in the first frame form the first set of 3D Gaussian splats; and
      identifying which of the 3D Gaussian splats included in the second frame form the second set of 3D Gaussian splats.
19. A computer program product comprising computer program code means which, when executed on a computing device having a processing system, cause the processing system to perform all of the steps of the method according to any one of embodiments 1 to 18.
20. A bitstream generated using the method of any of embodiments 11 to 18.
21. A bitstream comprising:
   a first plurality of encoded data structures for a first frame of a 3D scene, wherein each data entry in each encoded data structure in the first plurality comprises a set of parameters for a respective 3D Gaussian splat in a first set of 3D Gaussian splats representing the 3D scene at a first moment in time; and
   a second plurality of encoded data structures for a second frame of the 3D scene, wherein each data entry in each encoded data structure in the second plurality comprises a set of parameters for a respective 3D Gaussian splat in a second set of 3D Gaussian splats representing the 3D scene at a second, different moment in time, and wherein each data structure in second plurality corresponds to a respective data structure in the first plurality and has the same number of data entries as the corresponding data structure in the first plurality.
22. A method of distributing the bitstream of embodiment 20 or 21.
23. A decoding apparatus for decoding a dynamic representation of a 3D scene, the decoding apparatus being configured to:
   receive a bitstream comprising:
      a first plurality of encoded data structures for a first frame of a 3D scene including a first data structure and a second data structure, wherein each data entry in each encoded data structure in the first plurality comprises a set of parameters for a respective 3D Gaussian splat in a first set of 3D Gaussian splats representing the 3D scene at a first moment in time; and
      a second plurality of encoded data structures for a second frame of the 3D scene, wherein each data entry in each encoded data structure in the second plurality comprises a set of parameters for a respective 3D Gaussian splat in a second set of 3D Gaussian splats representing the 3D scene at a second, different moment in time, and wherein each data structure in the second plurality corresponds to a respective data structure in the first plurality and has the same number of data entries as the corresponding data structure in the first plurality;
   determine the number of data structures per frame and the number of data entries in each data structure;
   decode a first subset of data structures in the first plurality of encoded data structures; and
   decode a second subset of data structures in the second plurality of encoded data structures.
24. The decoding apparatus of embodiment 23, wherein, for each data structure in the second subset, the corresponding data structure is included in the first subset.
25. An encoding apparatus for encoding a dynamic representation of a 3D scene, the encoding apparatus being configured to:
   obtain a sequence of frames of a 3D scene, the sequence comprising:
      a first frame include a first set of 3D Gaussian splats representing the 3D scene at a first moment in time; and
      a second frame include a second set of 3D Gaussian splats representing the 3D scene at a second, different moment in time;
   for the first frame:
      define a first plurality of data structures;
      assign each 3D Gaussian splat in the first set to one of the data structures in the first plurality;
      for each 3D Gaussian splat in the first set, add a set of parameters for the 3D Gaussian splat to the data structure to which the 3D Gaussian splat is assigned; and
      encode, into a bitstream, each data structure in the first plurality; and
   for the second frame:
      define a second plurality of data structures, wherein each data structure in the second plurality corresponds to a respective data structure in the first plurality, and wherein each data structure in the second plurality has the same number of data entries as the corresponding data structure in the first plurality;
      assign each 3D Gaussian splat in the second set to one of the data structures in the second plurality;
      for each 3D Gaussian splat in the second set, add a set of parameters for the 3D Gaussian splat to the data structure to which the 3D Gaussian splat is assigned; and
      encode, into the bitstream, each data structure in the second plurality.

## Claims

1. A method (800) for decoding a dynamic representation of a 3D scene, the method comprising:
receiving a bitstream (915) comprising:
a first plurality of encoded data structures (500) for a first frame (210, 610, 710) of a 3D scene including a first data structure and a second data structure, wherein each data entry in each encoded data structure in the first plurality comprises a set of parameters for a respective 3D Gaussian splat in a first set of 3D Gaussian splats (215) representing the 3D scene at a first moment in time; and
a second plurality of encoded data structures for a second frame (220, 620, 720) of the 3D scene, wherein each data entry in each encoded data structure in the second plurality comprises a set of parameters for a respective 3D Gaussian splat in a second set of 3D Gaussian splats (225) representing the 3D scene at a second, different moment in time, and wherein each data structure in the second plurality corresponds to a respective data structure in the first plurality and has the same number of data entries as the corresponding data structure in the first plurality;
determining the number of data structures per frame and the number of data entries in each data structure;
decoding a first subset of data structures in the first plurality of encoded data structures; and
decoding a second subset of data structures in the second plurality of encoded data structures, wherein, for each data structure in the second subset, the corresponding data structure is included in the first subset.

2. The method (800) of claim 1, wherein:
the first data structure in the first subset is decoded by a first decoder;
the second data structure in the first subset is decoded by a second, different decoder; and
each data structure in the second subset is decoded by the decoder that decoded the corresponding data structure in the first subset.

3. The method (800) of claim 1 or 2, wherein:
at least one data structure corresponds to a region of the 3D scene;
the method further comprises defining a target viewport for each frame; and
for any data structure that corresponds to a region of the 3D scene, the data structure is only included in the first or second subset if the data structure corresponds to a region of the 3D scene that is determined to be visible in the target viewport and/or is identified as being required for decoding a data structure corresponding to a region of the 3D scene that is visible in the target viewport.

4. The method (800) of any of claims 1 to 3, wherein the method comprises:
defining a target viewport for each frame;
processing at least some of the decoded data structures in the first subset to render a first image frame in the target viewport for the first frame; and
processing at least some of the decoded data structures in the second subset to render a second image frame in the target viewport for the second frame.

5. The method (800) of claim 4, wherein:
the first data structure in the first subset is rendered by a first renderer;
the second data structure in the first subset is rendered by a second, different renderer; and
each data structure in the second subset is rendered by the renderer that rendered the corresponding data structure in the first subset.

6. The method (800) of claim 4 or 5, wherein:
at least one data structure corresponds to a region of the 3D scene; and
for each image frame, a data structure that corresponds to a region of the 3D scene is processed to render the image frame only if the data structure is determined to correspond to a region of the 3D scene that is visible in the target viewport.

7. The method (800) of any of claims 1 to 6, wherein:
at least one data structure in the first plurality contains a reference data entry and at least one further data entry, wherein the set of parameters for each further data entry is a set of first residual parameters; and
the step of decoding the first subset of data structures in the first plurality of encoded data structures comprises, for each data structure containing a reference data entry and at least one further data entry:
identifying the reference data entry; and
for each further data entry, adding the set of first residual parameters to the set of parameters in the reference data entry.

8. The method (800) of any of claims 1 to 7, wherein:
at least one set of parameters in at least one data structure in the second plurality is a set of second residual parameters; and
the step of decoding the second subset of data structures in the second plurality of encoded data structures comprises, for each data entry having a set of second residual parameters, adding the set of second residual parameters to the set of parameters for the corresponding data entry in the corresponding data structure in the first plurality.

9. The method (800) of claim 8, wherein:
the bitstream (915) further comprises, for at least one data structure in the second plurality, at least one shared residual parameter; and
the step of decoding the second subset of data structures in the second plurality of encoded data structures comprises, for each data structure having at least one shared residual parameter, transforming the set of parameters for each data entry in the corresponding data structure in the first plurality based on the at least one shared residual parameter before adding the set of second residual parameters.

10. A method (100) for encoding a dynamic representation of a 3D scene, the method comprising:
obtaining a sequence of frames (200) of a 3D scene, the sequence comprising:
a first frame (210, 610, 710) including a first set of 3D Gaussian splats (215) representing the 3D scene at a first moment in time; and
a second frame (220, 620, 720) including a second set of 3D Gaussian (225) splats representing the 3D scene at a second, different moment in time;
for the first frame:
defining a first plurality of data structures (500);
assigning each 3D Gaussian splat in the first set to one of the data structures in the first plurality;
for each 3D Gaussian splat in the first set, adding a set of parameters for the 3D Gaussian splat to the data structure to which the 3D Gaussian splat is assigned; and
encoding, into a bitstream (915), each data structure in the first plurality; and for the second frame:
defining a second plurality of data structures, wherein each data structure in the second plurality corresponds to a respective data structure in the first plurality, and wherein each data structure in the second plurality has the same number of data entries as the corresponding data structure in the first plurality;
assigning each 3D Gaussian splat in the second set to one of the data structures in the second plurality;
for each 3D Gaussian splat in the second set, adding a set of parameters for the 3D Gaussian splat to the data structure to which the 3D Gaussian splat is assigned; and
encoding, into the bitstream, each data structure in the second plurality.

11. The method (100) of claim 10, wherein any 3D Gaussian splat in the second set (225) that corresponds to a 3D Gaussian splat in the first set (215) is assigned to a corresponding data entry in the data structure in the second plurality that corresponds to the data structure in the first plurality to which the corresponding 3D Gaussian splat in the first set was assigned.

12. The method (100) of claim 10 or 11, wherein at least one data structure corresponds to a region of the 3D scene.

13. The method (100) of claim 12, wherein at least one data structure corresponds to a region defining an object in the 3D scene.

14. The method (100) of any of claims 10 to 13, wherein:
the first frame (210, 610, 710) and the second frame (220, 620, 720) each include at least one further 3D Gaussian splat; and
the method further comprises:
identifying which of the 3D Gaussian splats included in the first frame form the first set of 3D Gaussian splats (215); and
identifying which of the 3D Gaussian splats included in the second frame form the second set of 3D Gaussian splats (225).

15. A bitstream (915) comprising:
a first plurality of encoded data structures (500) for a first frame (210, 610, 710) of a 3D scene, wherein each data entry in each encoded data structure in the first plurality comprises a set of parameters for a respective 3D Gaussian splat in a first set of 3D Gaussian splats (215) representing the 3D scene at a first moment in time; and
a second plurality of encoded data structures for a second frame (220, 620, 720) of the 3D scene, wherein each data entry in each encoded data structure in the second plurality comprises a set of parameters for a respective 3D Gaussian splat in a second set of 3D Gaussian splats (225) representing the 3D scene at a second, different moment in time, and wherein each data structure in second plurality corresponds to a respective data structure in the first plurality and has the same number of data entries as the corresponding data structure in the first plurality.
